# EUROPEAN PATENT SPECIFICATION

(11) **EP 3 845 373 B1**
(45) Date of publication and mention of the grant of the patent: **04.10.2023**
(21) Application number: 20215335.9
(22) Date of filing: 18.12.2020
(51) Int. Cl.: B31F 1/14, B29C 70/86

(54) **CHAMBER DOCTOR BLADE, PARTICULARLY FOR PRINTING MACHINES, AND METHOD FOR ITS MANUFACTURE**
KAMMERRAKEL, INSBESONDERE FÜR DRUCKMASCHINEN, SOWIE VERFAHREN ZU DESSEN HERSTELLUNG
RACLE DE COMPARTIMENT, EN PARTICULIER POUR DES MACHINES D'IMPRESSION, ET PROCÉDÉ POUR SA FABRICATION

(30) Priority: 24.12.2019 IT 201900025453
(43) Date of publication of application: 07.07.2021
(73) Proprietor: Fibercompositi S.r.l., 24020 Cerete (BG) (IT)
(72) Inventor: CIATTO, Federico, 24069 TRESCORE BALNEARIO BG (IT)
(74) Representative: Modiano, Micaela Nadia

(56) References cited:
- WO-A1-01/28766
- S. Sihn and B.P. Rice: "Sandwich Construction with Carbon Foam Core Materials INTRODUCTION", Journal of Composite Materials, vol. 37, no. 15/2003 1 January 2003 (2003-01-01), pages 1319-1336, XP002800200, DOI: 10.1177/002199803033818 Retrieved from the Internet: URL:http://citeseerx.ist.psu.edu/viewdoc/d ownload?doi=10.1.1.823.6288&rep=rep1&type= pdf [retrieved on 2020-09-04]

## Description

The present invention relates to a chamber doctor blade, particularly for printing machines.

In the sector of printing machines, a chamber doctor blade is the device that makes it possible to collect and dose the ink on the printing cylinders, which is generally made of aluminum, by extrusion or by machining from a block.

Given the generous dimensions of such components, even for extruded components it is still necessary to execute machining operations in order to obtain weight reductions, provide receptacles for other components, or holes and threadings for fixing.

In fact, in machines with a printing plate that is wider than one and a half meters, the weight and the dimensions of the chamber doctor blade makes it difficult to handle, especially during ordinary maintenance operations and changes of format.

For example, every time a color change is carried out in production, the chamber doctor blade must be fully slid out and manually cleaned of all traces of ink and, although the movement into and out of the machine can be done with mechanical lifting means, to ensure the complete cleaning of the part some maneuvers carried out manually by operators are necessary.

This problem is also repeated for larger-dimensioned machines, for example three meters in size, with the aggravating factor that it is difficult to respect the safety rules for manually-moved loads.

In order to overcome this problem, chamber doctor blades have been developed that are made of alternative materials, such as for example carbon fiber, taking care to prioritize the physical and mechanical characteristics that this component needs to have.

There are principally two composite technologies used to make chamber doctor blades: the autoclave and the press.

These technologies are based on the use of reinforcement fibers, which may or may not be pre-impregnated with resin matrices and which are placed in special molds.

According to the technology employed, the material is inserted into a mold inside which a vacuum is created using a bag.

The mold is then placed inside an autoclave where, by virtue of a controlled cycle of pressure and temperature, the material is compacted and the resin cross-links integrally with the reinforcement fibers.

Alternatively the mold is placed in a press and the surfaces are heated, thus applying pressure and temperature.

With such technologies two types of chamber doctor blades can be produced: the first is characterized by a hollow tubular structure and the second is produced starting from a monolithic block, subsequently machined with a machine tool.

The first category of chamber doctor blades, i.e. those produced starting from a hollow structure, requires providing a tubular mold for insert molding, on the walls of which the material is deposited. The vacuum bag is then provided both internally and externally so as to ensure the necessary vacuum for the pressure inside the autoclave to compact the component.

Although the part thus made has a finished surface on all sides of the mold, this first type of chamber doctor blades is however not devoid of drawbacks, among which is the fact that the lack of material in the internal region complicates the ability to provide the necessary fixings for connecting the component with the other parts of the machine.

The second category of chamber doctor blades, i.e. those produced starting from a solid monolithic block, requires providing a parallelepiped of composite material which is then subsequently machined using a machine tool, providing the desired shape.

The advantage of this solution is the ability to obtain a part with the desired shapes and machining operations, as if it were obtained from a solid block of metallic material, but with a much lower density.

However, this second category of chamber doctor blades is also not devoid of drawbacks, including the fact that it results in large amounts of discarded material from machining by removal of shavings, it presents fibers externally that are broken off and which represent points of discontinuity of the outer surface with consequent points that could trigger breakage, it is difficult to clean, and it is heavier than chamber doctor blades obtained from a tubular structure.

WO 01/28766 A1 discloses a doctor body, particularly for printing machines comprising an internal portion covered by an outer shell made of a composite material.

The aim of the present invention consists in providing a chamber doctor blade that is such as to overcome the limitations and the drawbacks mentioned above.

Within this aim, an object of the present invention consists in providing a chamber doctor blade that is light, rigid, capable of being provided with all the inserts and accessories necessary to connect it to other components of the machine, and which does not present points of discontinuity that are such as to present notches and the like.

Another object of the present invention consists in providing a chamber doctor blade that, for its production, avails of technologies in common use in the sector.

Another object of the present invention consists in providing a chamber doctor blade that is economically competitive when compared to conventional chamber doctor blades.

This aim and these and other objects which will become better apparent hereinafter are achieved by a chamber doctor blade, particularly for printing machines, characterized in that it comprises an internal portion made of carbon foam covered by an external shell made of a composite material.

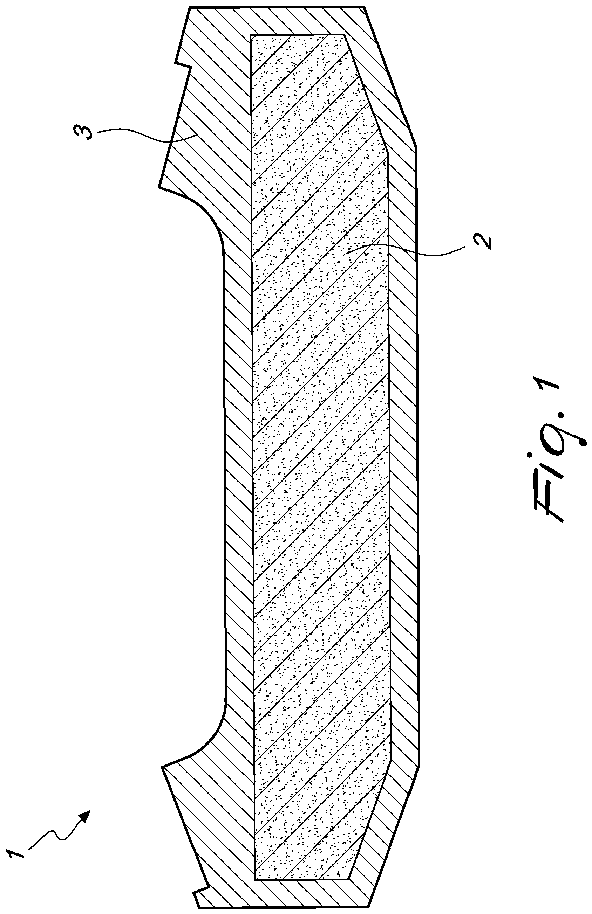

Further characteristics and advantages of the invention will become better apparent from the detailed description of a preferred, but not exclusive, embodiment of a chamber doctor blade, particularly for printing machines, according to the invention, which is illustrated by way of nonlimiting example in the accompanying drawing in which Figure 1 is a transverse cross-section of the chamber doctor blade according to the invention.

With reference to the figure, the chamber doctor blade, particularly for printing machines, generally designated by the reference numeral 1, comprises an internal portion 2 made of carbon foam covered by an external shell 3 made of a composite material.

Advantageously, such carbon foam is a filler material having a structure with cells of regular shape and consisting substantially of carbon, and the composite material is of the carbon type and comprises at least one layer of unidirectional long-fiber carbon fibers impregnated in an epoxy resin.

More specifically, the carbon foam is a porous carbon product containing cells of regular shape, predominantly concave, which are evenly dispersed and interact to form a three-dimensional matrix through a continuous carbon material, predominantly in the non-graphitic state.

In this way product with open or closed cells is obtained, with low density and high rigidity, which is obtained by pyrolysis (thermal decomposition at high temperature in the absence of oxygen) of organic materials.

The method of providing the chamber doctor blade 1 involves the following steps:
- providing a monolithic block made of the carbon foam,
- machining by removal of shavings of the monolithic block for the provision of the internal portion 2,
- covering the latter with at least one layer of fabric made of carbon fiber pre-impregnated in the epoxy resin,

- inserting the internal portion 2 into a mold,
- inserting the mold into a vacuum bag,
- firing the mold with simultaneous depressurization of the vacuum bag, respectively, for the cross-linking of the epoxy resin and for the elimination of the air contained in the bag and the obtainment of the external shell 3,
- extracting the chamber doctor blade 1 from the mold and from the bag.

As optional steps of the method above, there can be an optional step of finishing the chamber doctor blade 1 and a step of positioning and inserting inserts associated with the internal portion 2, to be carried out between the step of machining and the step of covering.

In practice it has been found that the chamber doctor blade, according to the invention, solve the technical problem explained above in that it presents the rigidity and the operational ductility of a component provided from solid material while retaining the lightness of a hollow component.

In fact, notwithstanding the low specific weight of the foam used, it is possible to obtain a semi-finished product that is capable of withstanding high pressure levels during cross-linking in an autoclave.

An advantage of the chamber doctor blade according to the present invention consists in that it can be made with complex geometries and with any type of insert necessary to couple it with other components of the machine.

The chamber doctor blade, thus conceived, is susceptible of numerous modifications and variations, provided they fall within the scope of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A chamber doctor blade (1), particularly for printing machines, comprising an internal portion (2) covered by an external shell (3) made of a composite material, wherein the internal portion is made of carbon foam.

2. The chamber doctor blade (1) according to claim 1, **characterized in that** said carbon foam is a filler material having a structure with cells of regular shape, consisting essentially of carbon.

3. The chamber doctor blade (1) according to claim 1 or 2, **characterized in that** said composite material is of the carbon type and comprises at least one layer of unidirectional long-fiber carbon fibers impregnated in an epoxy resin.

4. A method for providing a chamber doctor blade (1) according to one or more of the preceding claims, comprising the steps of:
- providing a monolithic block made of said carbon foam,
- machining by removal of shavings of said monolithic block for the provision of said internal portion (2),
- covering said internal portion (2) with at least one layer of fabric made of carbon fiber pre-impregnated in said epoxy resin,
- inserting said internal portion (2) into a mold,
- inserting said mold into a vacuum bag,
- firing said mold with simultaneous depressurization of said vacuum bag, respectively, for the cross-linking of said epoxy resin and for the elimination of the air contained in said bag and the obtainment of said external shell (3),
- extracting said chamber doctor blade (1) from said mold and from said bag.

5. The method according to claim 4, **characterized in that** said mold is of the open type.

6. The method (1) according to claim 4 or 5, **characterized in that** it comprises a step of finishing said chamber doctor blade (1) which is performed after opening said mold and said bag.

7. The method (1) according to one or more of claims 4 to 6, **characterized in that** it comprises a step of positioning and inserting inserts associated with said internal portion (2), said step of positioning and inserting inserts being performed between said step of machining and said step of covering.

## Patentansprüche

1. Eine Kammerrakel (1), insbesondere für Druckmaschinen, die einen inneren Abschnitt (2) umfasst, bedeckt von einer äußeren Schale (3) aus einem Verbundmaterial, wobei der innere Abschnitt aus Kohlenstoffschaum besteht.

2. Die Kammerrakel (1) gemäß Anspruch 1, **dadurch gekennzeichnet, dass** der Kohlenstoffschaum ein Füllmaterial ist, das eine Struktur mit Zellen von gleichmäßiger Form hat, die im Wesentlichen aus Kohlenstoff bestehen.

3. Die Kammerrakel (1) gemäß Anspruch 1 oder 2, **dadurch gekennzeichnet, dass** das Verbundmaterial vom Carbontyp ist und mindestens eine Schicht unidirektionaler langfaseriger Kohlenstofffasern, imprägniert in ein Epoxidharz, umfasst.

4. Ein Verfahren zur Herstellung einer Kammerrakel (1) gemäß einem oder mehreren der obigen Ansprüche, das folgende Schritte umfasst:
- Herstellen eines monolithischen Blocks, der aus dem Kohlenstoffschaum besteht,
- spanendes Bearbeiten durch Entfernen von Spänen des monolithischen Blocks zur Herstellung des inneren Abschnitts (2),
- Bedecken des inneren Abschnitts (2) mit mindestens einer Schicht Textilerzeugnis aus Kohlenstofffaser, vorimprägniert in dem Epoxidharz,
- Einsetzen des inneren Abschnitts (2) in eine Form,
- Einsetzen der Form in einen Vakuumbeutel,
- Feuerung der Form bei gleichzeitigem Druckabbau des Vakuumbeutels zur Quervernetzung des Epoxidharzes sowie zum Ablassen der in dem Beutel enthaltenen Luft und zur Herstellung der äußeren Schale (3),
- Extrahieren der Kammerrakel (1) aus der Form und aus dem Beutel.

5. Das Verfahren gemäß Anspruch 4, **dadurch gekennzeichnet, dass** die Form vom offenen Typ ist.

6. Das Verfahren (1) gemäß Anspruch 4 oder 5, **dadurch gekennzeichnet, dass** es einen Schritt der Endbearbeitung der Kammerrakel (1) umfasst, der nach dem Öffnen der Form und des Beutels durchgeführt wird.

7. Das Verfahren (1) gemäß einem oder mehreren der Ansprüche 4 bis 6, **dadurch gekennzeichnet, dass** es einen Schritt des Positionierens und Einsetzens von Einsätzen umfasst, die mit dem inneren Abschnitt (2) verbunden sind, wobei der Schritt des Positionierens und Einsetzens von Einsätzen zwischen dem Schritt des spanenden Bearbeitens und dem Schritt des Bedeckens durchgeführt wird.

## Revendications

1. Racle de chambre (1), en particulier pour machines à imprimer, comprenant une partie interne (2) couverte par une coque externe (3) faite d'un matériau composite, dans laquelle la partie interne est faite de mousse de carbone.

2. Racle de chambre (1) selon la revendication 1, **caractérisée en ce que** ladite mousse de carbone est un matériau de remplissage ayant une structure comportant des cellules de forme régulière, constitué essentiellement de carbone.

3. Racle de chambre (1) selon la revendication 1 ou 2, **caractérisée en ce que** ledit matériau composite est de type carbone et comprend au moins une couche de fibres de carbone longues unidirectionnelles imprégnées d'une résine époxy.

4. Procédé pour fournir une racle de chambre (1) selon l'une ou plusieurs des revendications précédentes, comprenant les étapes suivantes :
- fournir un bloc monolithique constitué de ladite mousse de carbone,
- usiner par retrait de copeaux dudit bloc monolithique pour la fourniture de ladite partie interne (2),
- couvrir ladite partie interne (2) d'au moins une couche d'un tissu constitué de fibres de carbone préimprégnées dans ladite résine époxy,
- insérer ladite partie interne (2) dans un moule,
- insérer ledit moule dans un sac sous vide,
- chauffer ledit moule avec une dépressurisation simultanée dudit sac sous vide, respectivement pour la réticulation de ladite résine époxy et pour l'élimination de l'air contenu dans ledit sac et l'obtention de ladite coque externe (3),
- extraire ladite racle de chambre (1) dudit moule et dudit sac.

5. Procédé selon la revendication 4, **caractérisé en ce que** ledit moule est du type ouvert.

6. Procédé (1) selon la revendication 4 ou 5, **caractérisé en ce qu'**il comprend une étape de finition de ladite racle de chambre (1) qui est exécutée après l'ouverture dudit moule et dudit sac.

7. Procédé (1) selon l'une ou plusieurs des revendications 4 à 6, **caractérisé en ce qu'**il comprend une étape consistant à positionner et insérer des inserts associés à ladite partie interne (2), ladite étape de positionnement et d'insertion d'inserts étant exécutée entre ladite étape d'usinage et ladite étape de couverture.
